# EUROPEAN PATENT APPLICATION

(11) **EP 4 645 244 A1**
(43) Date of publication of application: **05.11.2025**
(21) Application number: 24173098.5
(22) Date of filing: 29.04.2024
(51) Int. Cl.: G06T 19/20

(54) **METHOD FOR GENERATING AT LEAST ONE AUGMENTED IMAGE, MEDICAL VISUALIZATION SYSTEM AND COMPUTER PROGRAM PRODUCT**

(71) Applicant: Carl Zeiss Meditec AG, 07745 Jena (DE)
(72) Inventor: PHILIPP, Marcus, 73447 Oberkochen (DE); YOU, Fang, 07745 Jena (DE); GEISSLER, Enrico, 07745 Jena (DE)
(74) Representative: Ramrath, Lukas

(57) **Abstract**

The invention relates to a method for generating a first augmented image (AI1) when operating a medical visualization system (4) with a surgical microscope (10) comprising at least a first image acquisition device (5), the method comprising the steps of
a. receiving a first real image (RI1) being generated by the first image acquisition device (5) and representing an image of an examination area,
b. generating a first virtual image (VI1) based on a reference data set (R) representing three-dimensional additional information (A) and a three-dimensional window object (O), the window object (O) being open on at least one side, wherein an inner section (VI1_IS) of the first virtual image (VI1) is represented in a different way than an outer section (VI1_OS) of the first virtual image (VI1), wherein the inner section (VI1_IS) depicts a volume inside the window object (O) and the outer section (VI1_OS) depicts a volume outside the window object (O),
c. generating the first augmented image (AI1) which represents the first real image (RI1) on which the first virtual image (VI1) is superimposed in at least a partial area.
a medical visualization system (4) and a computer program product.

## Description

The invention relates to a method for generating at least one augmented image, a medical visualization system and a computer program product.

Surgical microscopes are used, among other things, to prepare and perform operations on a patient, particularly medical operations. Such surgical microscopes are used by a user, e.g. a surgeon or an assistant, during a treatment in order to provide a particularly magnified representation of an examination area, in particular in or on the patient's situs. For this purpose, a surgical microscope may comprise an objective lens or an objective lens system to produce a real optical image of the examination area. The objective may comprise optical elements for guiding and/or shaping and/or directing the beam. In particular, an optical element can be a lens.

Surgical microscopes are used in medical facilities, but also in laboratories or in industrial applications. Examples of medical applications include neurosurgery, eye surgery, ear, nose and throat surgery, plastic or reconstructive surgery and orthopaedic surgery. This list is not exhaustive. In general, they are used in all areas of surgery in which a magnified and high-resolution view of the surgical field is required in order to perform precise procedures.

A distinction can be made between analogue and digital surgical microscopes. In contrast to digital surgical microscopes, analogue surgical microscopes do not capture images that are then displayed, for example, on a screen for an enlarged representation of the examination area, but instead offer a directly visually detectable magnification of the examination area for the user. In this case, radiation reflected or scattered by the application area passes through the lens into at least one beam path and to at least one output section through or into which the user looks in order to visually detect the radiation and thus also the generally enlarged representation of the examination area. An exemplary embodiment of an output section is a so-called eyepiece into or through which the user looks in order to visually capture the examination area with at least one eye.

Digital surgical microscopes comprise exactly or at least one image acquisition device for microscopic imaging, which captures radiation in a beam path of the surgical microscope in order to generate an image, in particular a magnified image, whereby this image can be displayed to the user or also to several users on one or more display device(s). This enables high-resolution visualization. The image can be generated in the form of an image signal, in particular a transmittable image signal, which encodes or represents the image. In contrast to analogue surgical microscopes, purely digital surgical microscopes do not have an output section for visually detectable radiation, i.e. in particular no eyepiece. An image signal can then be transmitted in the form of a data signal, in particular in a wired or wireless manner. Digital surgical microscopes enable images and videos to be recorded, stored and further processed. By using image processing methods, contrast, brightness and other parameters in particular can be adjusted in order to optimize the image quality of the generated images. Hybrid surgical microscopes can have both at least one image acquisition device and at least one output section. For example, the radiation guided in a beam path of the surgical microscope can be split using a beam splitter, whereby a first portion is directed to the output section and a further portion is captured by the at least one image acquisition device.

Also known are stereo surgical microscopes which generally comprise two separate beam paths for beam guidance and provide the user with a depth impression of the examination area. For this purpose, the beams guided in the two beam paths can be visually detected by the user via output sections. Digital surgical microscopes alternatively or additionally comprise two image capture devices, each of which captures the beams in one of the beam paths in order to generate an image, whereby a three-dimensional image is then provided to the user via a suitable display device based on the two images, which can also be referred to as corresponding images. The image acquisition devices form part of a stereo (camera) system.

The surgical microscope can form a medical visualization system or the medical visualization system can comprise the surgical microscope. The components of the medical visualization system explained below can be components of the surgical microscope or components formed differently from the surgical microscope.

Also known is the provision of an augmented representation of the examination area for a user. In particular, an augmented representation can be a representation of the real examination area, which is extended with computer support, in particular by superimposing or overlaying at least one virtual object and/or other additional information on the representation of the real examination area as additional information. The augmented representation can be displayed to a user in the form of an augmented image on a display device or provided in a visually detectable manner via an output section.

Additional information can be provided in the form of data that represents or encodes a geometric description of a three-dimensional space, in particular with (virtual) objects arranged therein. Additional information can also be information generated from such data, for example information generated by rendering.

An important requirement for augmentation is that a observer of the augmented image, in particular a surgeon, is not disturbed or distracted by the augmentation during their work. In particular, it is desirable for a surgeon to be able to operate ergonomically even when viewing an examination area with superimposed augmentation. For example, it is particularly important that an object, such as a tumor, which lies spatially behind a surface of the examination area along a viewing direction, is also displayed in an augmented image in such a way that it is not falsely perceived as an object located spatially in front of the surface, as this can make the spatial perception of the observer more difficult. This can also distort a stereo depth impression when viewed through a stereo operating microscope. This can be the case in particular if augmented objects are also superimposed in a stereoscopically perceptible manner, as the corresponding three-dimensional perception can be confusing for the observer. By directly overlaying three-dimensional information in an opaque or semi-transparent manner onto a live microscopic view of the examination area, the observer might be unable to distinguish shallower and deeper structures in the overlay and be unable to know the depth of 3D-overlayed structure relative to the visible surface in microscopic view. In other words, the observer might be unable to distinguish a depth of each region in the same 3D-overlay, the depth among different 3D-overlays and/or the depth between 3D-overlay(s) and the visible surface.

Another requirement is that an observer is not visually overwhelmed by the addition information in the augmented image.

US 2015/0221105 A1 discloses an imaging system which displays a multidimensional visualization of a surgical site. The imaging system receives a selection corresponding to a portion of the displayed multidimensional visualization of the surgical site. At the selected portion of the multidimensional visualization, the imaging system displays a portion of a multidimensional reconstructed image which corresponds to the selected multidimensional visualization such that the displayed portion of the multidimensional reconstructed image is fused with the displayed multidimensional visualization.

WO 2022/192690 A1 relates to stereoscopic surgical systems, and more specifically to touchless registration of patient anatomy for surgical navigation systems.

DE 10 2014 224 044 A1 relates to a method for visualizing multimodal data in the image field of a surgical operating microscope.

There is the technical problem of providing a method for generating an augmented image by a medical visualization system, a medical visualization system and a computer program product, which increase a display quality of the augmented image for improved perception of an imaged examination area during augmentation and thus overcome at least one of the disadvantages explained above.

The solution to the technical problem is provided by the objects with the features of the independent claims. Further advantageous embodiments of the invention result from the sub claims.

A method for generating at least one augmented image when operating a medical visualization system with a surgical microscope is proposed, the surgical microscope comprising at least a first image acquisition device.

Surgical microscopes and their technical features have already been briefly explained above. In particular, the surgical microscope can be a stereo microscope. The surgical microscope can also be designed as an endoscope.

A surgical microscope can comprise a microscope body. The lens explained at the beginning can be integrated into the microscope body or attached to it, in particular detachably. In this case, the objective can be arranged in a fixed position relative to the microscope body. In addition to the objective, the microscope body can also have or form at least one beam path for microscopic imaging and/or other optical elements for beam guidance and/or shaping and/or deflection. In analogue and hybrid surgical microscopes, the microscope body may comprise at least one attachment interface for attaching, in particular detachably, an output element, e.g. an eyepiece. The microscope body can comprise or form a housing or be arranged in a housing. Components of the surgical microscope, such as an image acquisition device for microscopic imaging, can be arranged in or on the housing.

In addition to the surgical microscope, the medical visualization system may comprise a stand for holding the surgical microscope. The surgical microscope, in particular the microscope body, can be mechanically attached to the stand. The stand is designed in such a way that it enables the surgical microscope to be moved in space, in particular with at least one degree of freedom, preferably with six degrees of freedom, whereby one degree of freedom can be a translational or rotational degree of freedom. Furthermore, the stand can comprise at least one drive device for moving the surgical microscope. Such a drive device can be a servomotor, for example. Of course, the stand can also comprise means for transmitting force/torque, e.g. gear units.

In particular, it is possible to control the at least one drive device in such a way that the surgical microscope performs a desired movement and thus a desired change of position in space or assumes a desired position, i.e. a position and/or orientation, in space. For example, the at least one drive device can be controlled in such a way that an optical axis of an objective of the surgical microscope assumes a desired orientation. Furthermore, the at least one drive device can be controlled in such a way that a reference point of the surgical microscope, e.g. a focus point, is positioned at a desired position in space. A target position can be specified by a user or another higher-level system. Methods for controlling the at least one drive device as a function of a target position and a kinematic structure of the stand are known to the skilled person.

Furthermore, the medical visualization system can comprise one or even several display device(s) for displaying the images. The display device can be used to display two- or three-dimensional images. A three-dimensional image can in particular be or comprise a stereo image pair, whereby the images of this image pair are stereoscopic images. Typical display devices are screens, in particular 3D screens, head-mounted displays (HMD) or digital eyepieces, which can also be referred to as booms, but also analogue oculars/eyepieces through which an augmented image can be provided to an observer.

Furthermore, the medical visualization system, in particular the surgical microscope, may comprise one or more of the following elements:
- at least one white light illumination device,
- at least one infrared illumination device,
- at least one fluorescence illumination device for the excitation of fluorescence radiation,
- at least one beam filter for providing excitation radiation with wavelengths from a broader spectrum, e.g. the spectrum of the white light illuminator,
- at least one fluorescence detection device for detecting fluorescence radiation,
- at least one filter device for filtering radiation from a broader spectrum, e.g. for detection by an image acquisition device for microscopic imaging,
- at least one image acquisition device of an optical position detection device, which can also be referred to as an environment camera,
- at least one device for detecting the direction of gaze, in particular of a viewer,
- at least one position detection device for determining a pose, i.e. a position and/or orientation, of at least the surgical microscope,
- at least one input device for operation,
- at least one interface for data transmission to or from a further system or a further device,
- at least one device for determining depth information, in particular with regard to the elements arranged in the detection range of the surgical microscope, which can be designed as a distance sensor, for example,
- at least one memory device for storing signals and/or information, in particular in a retrievable manner.

An image acquisition device can comprise a CMOS or CCD sensor. A detection area of the environment camera can completely or at least partially encompass the detection area of the surgical microscope. Alternatively, a detection area of the surgical microscope can completely or at least partially encompass the detection area of the environment camera.

For example, in a fluorescence visualization mode, a filter device can be introduced into an observation beam path, providing an observer with an image of the examination area filtered by the filter device. This radiation can be captured by the at least one image capture device for microscopic imaging. Alternatively, fluorescent radiation can also be detected by a detection device that is different from the image acquisition device for microscopic imaging, e.g. a spectral camera. The fluorescence mode advantageously enables intraoperative tissue differentiation. Fluorescence-based images can be used to visualize tumour tissue. Polarization contrast-based images can be used to visualize nerve tissue.

Medical visualization systems can be operated, for example, via manual actuation of a component, in particular the surgical microscope, or a corresponding input device, via voice control, gesture control, gaze control, image-based control or other operating methods. The medical visualization system or the surgical microscope can comprise the devices required for this. In particular, image-based control can comprise the generation of operating or control signals by evaluating at least one image generated by an image acquisition device for microscopic imaging or an image acquisition device of an optical position detection device.

Adjustable operating parameters of the medical visualization system or the surgical microscope can be formed by one or more of the following parameters:
- magnification factor or zoom factor,
- working distance or focus position,
- detection range,
- illumination intensity,
- illumination spectrum.

The proposed method comprises the steps of
a. receiving a first real image being generated by the first image acquisition device and representing an image of an examination area,
b. generating a first virtual image based on a reference data set representing three-dimensional additional information and at least one three-dimensional window object, the window object being open on at least one side, wherein an inner section of the virtual image is represented in a different way than an outer section of the virtual image, wherein the inner section depicts a volume inside the window object and the outer section depicts a volume outside the window object,
c. generating a first augmented image which represents the first real image on which the first virtual image is superimposed in at least a partial area.

The generated augmented image can then be transmitted, in particular as an image signal, to a display device, which is then controlled to output the image in a visually detectable manner. A virtual (3D) image or an augmented (3D) image can in particular depict visible and/or hidden objects, which means that these can then also be represented in a visually detectable manner. In this context, an object can relate to an element or a structure to be depicted.

It is possible that in a transition from the inner section or selected portions thereof to the outer section, a transition of representation can take place, in particular in a linear manner.

A virtual image can encode a texture, in particular with colour and/or transparency information.

The image signal can be received via an interface of the medical visualization system. In particular, the image signal can represent a two-dimensional image. The examination area can be an area of a patient's situs during an operation or during a diagnostic examination. The first real image can in particular denote a live image of the examination area which is generated by the image acquisition device of the surgical microscope in real time or intraoperatively.

The received image signal can preferably represent a white light image (VIS image) generated with visible radiation, i.e. radiation from a wavelength range between 360 nm and 830 nm. It is also conceivable that the real image is provided as a fluorescence contrast image, which was generated by radiation with predetermined fluorescence-specific wavelengths or wavelength ranges, for example with wavelengths of 400 nm or 560 nm. The real image can also be provided as a polarization contrast image generated by radiation with a predetermined polarization. Consequently, the image acquisition device of the surgical microscope may be an image acquisition device for microscopic, i.e. magnified, imaging of the examination area or may be a different image acquisition device.

The three-dimensional additional information can in particular be preoperatively generated information that is provided, for example, in the form of preoperatively generated data, whereby this can also be used to plan an intervention. Such preoperatively generated data can in particular be volume data. Volume data can be provided in the form of a point cloud, in the form of a voxel-based representation or in the form of a mesh-based representation. The additional information may in particular also be provided in the form of a signal, in particular a transmittable signal.

Preoperative data can be generated by different imaging modalities such as computed tomography-based (CT-based) or magnetic resonance imaging-based (MRI-based) procedures. Other, in particular imaging, methods/modalities such as ultrasound-based, X-ray-based, fluorescence-based, SPECT-based or PET-based methods can also be used for generation. Such augmentation can be used, for example, to superimpose a tumor object or its contours, which were generated on the basis of preoperative information, on a white light real image. In preoperative data generated with a magnetic resonance imaging-based procedure, different types of tissue such as fatty tissue, muscle tissue, tumor tissue, but also blood vessels and nerve tracts can be identified. In preoperative data generated using a computed tomography-based method, bony structures in particular can be visualized.

Alternatively or in addition to the use of preoperatively generated information to provide the augmented image, it is possible that intraoperative information, i.e. information recorded or generated during a treatment, can be used as additional information to generate the augmented image. For example, information can be collected and stored during an operation, which can then be used to generate an augmented image. This is particularly advantageous if there are different visualization modalities that are activated at different times. For example, fluorescence information can be displayed in a fluorescence visualization modality or superimposed on a white light real image.

A reference coordinate system can be assigned to the reference data set, which means that the reference data set can also include spatial information. This reference coordinate system can also be referred to as a world coordinate system. It can be also the reference coordinate system of the three-dimensional additional information.

For augmentation, it is usually necessary to perform a registration between the reference coordinate system of the reference data set and a reference coordinate system of the medical visualization system, in particular the surgical microscope or an image acquisition device of the surgical microscope. This registration can be performed before or during augmentation. A registration during augmentation can be provided by tracking an object, e.g. the surgical microscope or an image acquisition device, with a tracking system, wherein the pose of said object can be constantly updated. The registration determines a spatial reference of both, the reference data set and the (real) image, to a common reference coordinate system, in particular also for the information in the image generated by the image acquisition device of the surgical microscope. This common reference coordinate system can in particular be the reference coordinate system of the reference data set, the reference coordinate system of the medical visualization system, but also a different reference coordinate system.

Methods for registration are known to the skilled person. For example, model-based registration can be applied. In this case, features can be detected in an image that correspond to previously known features, e.g. to geometric features in the reference data set or in the additional information, whereby the registration can then be determined in a known manner as a function of these corresponding features. The registration can, for example, be determined in the form of a transformation matrix comprising a rotation and/or translation component. An exemplary, model-based registration can be an edge-based registration, whereby the corresponding features are formed, for example, by a property of at least one, preferably several, edges both in the image and in the reference data set or additional information. Topography-based registration can also be used, in particular if a topography can be determined, e.g. using a stereo system of a surgical microscope. In this way, topographical information can be determined in the at least one image, whereby corresponding features or points or sections are then detected in the reference data set or additional information as well as in this topographical information, which can then be used to determine the registration.

The reference data set can thus be a registered data set. For the purposes of the present invention, the property "registered" can mean that a spatial reference to the common reference coordinate system is known, in particular in the form of a transformation matrix. A registered device can generate signals or data whose spatial reference to the common reference coordinate system is known.

The additional information can be generated in particular by rendering. In this way, the first virtual image can be generated by rendering based on the reference data set, which is then used for augmentation and, for example, superimposed on an in particular live image of the real examination area, i.e. the first real image. The first virtual image can also be provided as an image signal that encodes or represents the first virtual image. Rendering or image synthesis is the process of generating a photorealistic or non-photorealistic image from a 2D or 3D model by means in a computer-implemented manner. The resulting image can be referred to as the render. Multiple models can be defined in a scene file containing objects in a defined language or data structure. The scene file can contain geometry, viewpoint, texture, lighting, and shading information describing the virtual scene. The data contained in the scene file is then passed to a rendering program to be processed and output to a digital image or raster graphics image file. A software application or component that performs rendering is called a rendering engine, render engine, rendering system, graphics engine, or simply a renderer.

A virtual image can be generated with a virtual image acquisition device, whereby this can be a mathematical or physical and, in particular, computer-aided evaluable optical model of the first image acquisition device. In particular, a computer-implemented calculation of the pixels of the virtual image can be performed.

This virtual image depends, among other things, on parameters of the (modelled) image acquisition device. In particular, the virtual image can be generated as a function of the intrinsic parameters of the image acquisition device, in particular with these parameters. If corresponding images of a virtual stereo system are generated, these can also be generated as a function of the extrinsic parameters of the two image acquisition devices of the stereo system, in particular with these parameters. In other words, the parameters of the image acquisition device(s) of the surgical microscope used for microscopic imaging can be taken into account when evaluating the model for generating the virtual images. This makes it possible to create virtual images under the same conditions as real images.

Likewise, the virtual image can be generated as a function of a pose, i.e. a position and/or orientation, of the (modelled) image acquisition device of the surgical microscope. In particular, the pose of the image acquisition device(s) of the surgical microscope used for microscopic imaging can be taken into account when evaluating the model for generating the virtual images, whereby the registration information explained can be used. Taking into account the registration information, it can be determined, for example, which pose of the virtual image acquisition device in the reference coordinate system of the reference data set, which can also be referred to as the render coordinate system, corresponds to the real pose of the (modelled) image acquisition device of the surgical microscope and this information can be used for the rendering process. In other words, a pose of the at least one virtual image acquisition device may be equal to the pose of the modelled image acquisition device in the reference coordinate system. Thus, it is possible to generate a virtual image that corresponds to one of the modeled image acquisition device both in terms of the parameters and the acquisition pose. For example, an image of a tumor object to be superimposed can be generated by rendering and then transmitted as an image or video signal and used for augmentation.

Thus, in order to provide virtual images, it may be necessary to determine a pose of the image acquisition device(s) of the surgical microscope relative to the objects to be augmented, i.e. the reference coordinate system of the three-dimensional additional information. This pose can be determined by determining and as a function of a current pose of the surgical microscope, in particular its image acquisition device(s). This pose can be determined using a position detection device. Registration can be used to determine a reference between the reference coordinate system of the position detection device and the previously explained reference coordinate systems, in particular the common reference coordinate system or the reference coordinate system of the reference data set. Corresponding registration methods are known to the skilled person. This makes it possible to determine the pose of the surgical microscope in a desired reference coordinate system, in particular the common reference coordinate system. Depending on the pose of the surgical microscope, a pose of the optical axis of the objective or a position of a focus point can in turn be determined. If the surgical microscope is attached to a stand with at least one joint, the pose of the surgical microscope can also be determined as a function of a joint position, whereby the joint position can be detected, for example, by a detection device or a sensor.

The pose of the surgical microscope and the reference data set can define the aforementioned scene, e.g. a virtual spatial model that defines objects and their material properties, light sources, as well as the position and viewing direction of an observer, here the surgical microscope.

It is, of course, possible that the pose of at least one further subject or object or a part thereof is also detected with the position detection device or a further position detection device. In particular, a subject can be a user of the medical visualization system, e.g. an observer of the examination area or a display device. For example, it is conceivable to determine a pose of a body part of such a user, e.g. a hand, an arm or a head. An object can be another component of the medical visualization system, in particular a display device. However, an object can also be an object that is not part of the medical visualization system, e.g. an item of equipment such as an operating table or a medical instrument. This makes it possible to determine the pose of the other subject or object in a desired reference coordinate system.

Such a position detection device can also be referred to as a tracking system. A tracking system can be an optical, electromagnetic or other type of tracking system. The tracking system can be a marker-based tracking system that detects active or passive markers. Markers can be arranged on objects or subjects whose pose is to be detected by the tracking system. In particular, an optical tracking system can include optically detectable markers. In particular, an optical tracking system can be a system for monoscopic position detection. Here, the pose of an object can be determined by evaluating a two-dimensional image, in particular precisely one two-dimensional image. In particular, the pose can be determined by evaluating the intensity values of pixels (image points) of the two-dimensional image.

It is also conceivable that the medical visualization system comprises at least one image acquisition device of an optical position detection device, which can in particular be a component of the surgical microscope. This can also be referred to as an environment camera and can be used in particular for monoscopic position detection. A tracking system can also be part of an input device, whereby, for example, gesture control or gaze direction control takes place depending on information generated by the tracking system.

To generate the augmented image, the first virtual image can be introduced into the beam path, e.g. by reflection. For example, the first virtual image can be projected by means of a projection device of the surgical microscope onto a projection element, e.g. a particularly radiolucent disk, which is arranged in the beam path. The augmented image can then be generated by creating an image based on the beams into which the additional information has been introduced as explained. Alternatively or cumulatively, the radiation representing the augmented image can also be provided by an output section for visual detection by an observer.

Alternatively, an augmented image can be generated in which an image of the real examination area, in particular the first real image, is extended with computer support, in particular by means of image processing. In this case, the first virtual image can be superimposed on the first real image, e.g. by suitable augmentation methods such as an alpha blending method. Preferably, the first virtual image has the same size as the first real image and can thus be superimposed completely. It is, however, also conceivable that the first virtual image is smaller than the first real image and is only superimposed on a portion of the first real image or that the first virtual image is larger than the first real image in order to depict information beyond/outside the first real image. It is e.g. possible that the first real image or the first virtual image can be displayed in a first display region, e.g. a centre region, while the remaining image can be displayed in at least one further display region, e.g. an edge region, or covers the whole display area.

In the case of a stereo operating microscope having a stereo system, image signals generated by the two image acquisition devices of the stereo system and representing corresponding images of the examination area can be received. With such a stereo operating microscope, it is possible to provide the user with two augmented images. In general, virtual images (corresponding to each other) can be introduced into each of the two beam paths of a stereo operating microscope. In the case of digital stereo operating microscopes, for example, augmented images can be generated by superimposing a virtual image on each of the (real) images generated by both image acquisition devices. The virtual image acquisition devices can be optical models of the image acquisition devices of the stereo system. In this way, an augmented image with depth information, i.e. an augmented three-dimensional representation, can also be provided to a user on a corresponding display device or by an output section, wherein a perspective-correct augmentation is advantageously generated, in particular in a three-dimensional and consistent manner.

As the reference data set also represents the window object and as the first virtual image is generated based on the reference data set, the first virtual image can also depict the window object or parts thereof. As the window object is open on at least one side, a volume inside the window object can visually be perceived through an opening. In other words, a window object being opened on at least one side can have at least one opening and/or can provide at least one opening through which a volume inside the window object can be visually perceived.

The window object can be provided in the form of a point cloud, in the form of a voxel-based representation or, preferably, in the form of a mesh-based representation, wherein a mesh element in a mesh-based representation can be defined by vertices and edges. The window object can have different geometries and/or dimensions. The geometry and/or the dimensions of the window object and/or of the opening can be set by a user, in particular using an input device. The geometry and/or the dimensions of the window object and/or of the opening can also be set automatically, for example by reading out the corresponding information from a lookup table or database or by performing a determination of the corresponding information by software means, e.g. a previously trained software engine. The lookup table or database can be stored in a storage device. Moreover, the geometry and/or the dimensions of the window object and/or of the opening can determined as a function of the type of surgery, the surgery phase, patient data, preferences of the user, sensor data and/or other conditions. A dimension can e.g. be a width, a length, a diameter but also another dimensional characteristic. The window object can have a cup shape, a cuboid shape, a funnel shape, a cone shape or any other kind of shape. A bottom surface of the object that is open on one side can be rounded and, in particular, designed as a convexly curved surface. The opening can have a circular or rectangular shape but also any other shape.

The opening can be an opening in a surface of the window object and may be provided by at least one of
1. a non-existent boundary surface or a non-existent boundary surface region or section, in particular by at least one hole in a boundary surface enclosing the inner volume. Such an opening can e.g. be a hole defined in one of the above-mentioned representations of the window object surface. In other words, the opening can be native to the window object. In this case, the pose of the opening, e.g. a position of a centre point and/or an orientation of a centre axis of the opening, is preferably defined as a fixed pose in a window object-fixed coordinate system.
2. a fully or at least partially transparent region or section of the boundary surface, said boundary surface preferably being an enclosed surface. This can also be referred to as virtual opening. In this case, the pose of the opening can be defined as
   a. a fixed pose in a window object-fixed coordinate system or as
   b. a varying pose in a window object-fixed coordinate system.

A fixed pose, e.g. in case of embodiment 1 and 2.a, can be set by a user, in particular using an input device, and can remain unchanged until a redefinition by the user. In particular, the fixed pose does not depend on a pose of the window object relative to a reference direction, in particular an observation direction. A fixed pose can also be set or redefined automatically, for example by reading out the corresponding information from a lookup table or database or by performing a determination of the corresponding information by software means, e.g. a previously trained software engine. The lookup table or database can be stored in a storage device. Moreover, the geometry and/or the dimensions of the window object and/or of the opening can determined as a function of the type of surgery, the surgery phase, patient data, preferences of the user, sensor data and/or other conditions.

A varying pose of the opening, e.g. in case of embodiment 2b., can depend on a pose of the window object relative to a reference direction which can e.g. be defined as the pose of the window object-fixed coordinate system relative to the reference direction. In this case, the pose of the opening can change if the pose of the window object relative to the reference direction is changed. In one example, the reference direction is an observation direction, e.g. the observation direction of a virtual image acquisition device. If the pose of the virtual image acquisition device with respect to the window object and thus the observation direction is changed, the pose of the opening in the window object-fixed coordinate can also change.

Likewise, if the pose of the virtual image acquisition device is changed, for example with respect to a world coordinate system, the pose of the window object relative to the world coordinate system can also change, in particular in a similar manner. In one example, when the pose of the virtual image acquisition device is changed with respect to a world coordinate system, the pose of the window object relative to the world coordinate system is also changed such that the pose of the window object relative to the reference direction, defined by the observation direction of the virtual image acquisition device, stays the same. In other words, the window object can be arranged fixed in position and/or orientation with respect to a reference direction and/or reference point, in particular provided by a virtual image acquisition device.

One example of such a varying pose is explained with reference to a mesh-based representation of the window object. In this case, surface vectors, i.e. normal vectors, of each mesh element, e.g. triangle, can be used to define the visibility of the particular mesh element. In particular, the visibility of a mesh element can be controlled as a function of the orientation of the respective surface vector with respect to the reference direction. As the surface vector of each mesh element can have two orientations, i.e. an inward orientation directed towards an inner volume enclosed by the window object or an outward orientation directed towards an exterior volume, the visibility can be controlled as a function of the orientation of the inward orientation or the outward orientation of the respective surface vector with respect to the reference direction.

The following example is given in relation to the inward orientation: If an angle of an inward oriented surface vector is within the range of +90° (exclusive) to +270° (exclusive) with respect to the reference direction or if an orientation of the inward oriented surface vector has a directional component which is oriented in the opposite direction to the reference direction, the corresponding mesh element can be defined as an inner surface mesh element. If an angle of an inward oriented surface vector is within the range of +270° (inclusive) to 360° (inclusive) or within the range of 0° (inclusive) to +90° (inclusive) with respect to the reference direction or if an orientation of the inward oriented surface vector has a directional component which is oriented in the same direction as the reference direction, the corresponding mesh element can be defined as an outer surface mesh element.

The inner surface mesh element(s) can be represented in a different way than the outer surface mesh element(s). An example is that the inner surface mesh element(s) are represented as visible surface mesh element(s) while the outer surface mesh element(s), in particular mesh elements in the region of the opening, are represented as completely or at least partially invisible surface mesh element(s). In more general terms, the inner surface of the window object with respect to the reference direction can be represented in a different way than the outer surface.

It is thus possible to control each mesh element's visibility (by culling or by transparency) as a function of the orientation of its surface vector relative to the reference direction. As a result, only the inner surface mesh elements (with respect to the reference direction) can be represented in a visible manner, in particular when observing the windows object background from outside. It is further possible to represent the outer surface mesh elements completely or partially invisible, in particular in the region of the opening. As one example, at least 80% or even 100% of the outer surface mesh element(s) can be represented as invisible surface mesh elements. As another example, all the outer surface mesh elements or the outer surface mesh elements of the outer surface in the region of the opening can have at most 20% or even 0% opacity. In both exemplary cases, the inner surface mesh elements can be represented more opaque, e.g., with 100% or at least 80% opacity.

It is further possible that the degree of visibility is proportional to the orientation of the respective surface vector with respect to a reference direction, at least for in a sub interval of surface vector orientations. In particular, a smooth, e.g. a linear, transition of visibility can be provided. Another transition, however, is also conceivable, e.g. a step-like transition.

The reference direction being defined as an observation direction is only one example. It is conceivable that other reference directions can be selected, e.g. a direction between a reference point outside the window object and a predetermined point in or on the window object. The reference direction or at least one of the above points can be set by the user. The reference direction or at least one of the above points can also be set automatically, for example by reading out the corresponding information from a lookup table or database or by performing a determination of the corresponding information by software means, e.g. a previously trained software engine. The lookup table or database can be stored in a storage device. Moreover, the geometry and/or the dimensions of the window object and/or of the opening can determined as a function of the type of surgery, the surgery phase, patient data, preferences of the user, sensor data and/or other conditions.

The pose of the window object, in particular the pose of the opening, can be set by a user, e.g. by means of an input device. The pose of the window object can also be set such that an opening is arranged on a visible surface in the examination area in the augmented image or not more than a predetermined distance away from, in particular above, said surface, e.g. automatically. This pose of the window object can be fixed while a dimension of the window object with said pose can be adjusted e.g. by a user, in particular during the subsequent generation of multiple augmented images. In this case, the opening can be attached to or be fixed above the visible surface. Adjusting the dimension can e.g. be performed by adjusting a pose of a bottom surface of the window object. The pose of the window object can also be set such that the window object is arranged in the field of view of the surgical microscope, e.g. automatically, wherein the opening can be oriented towards an observer who observers the field of view through the surgical microscope. As before, this pose of the window objected can be fixed while a dimension of the window object with said pose can be adjusted e.g. by a user, in particular during the subsequent generation of multiple augmented images. In this case, the opening is attached to the field of view.

It is possible that a dimension of the window object is determined as a function of at least one operating parameter of the medical visualization system. As one example, the dimension can be determined such that the representation of the window object in the augmented image is not larger than a predetermined proportion of the total size of the image, e.g. 30%. It is, however, also possible to set the dimension of the window object to a fixed dimension. Further, a pose of the window object can be defined such that an inner volume of the window object is visible through the opening and/or that the central opening is intersected by the optical axis of the surgical microscope, in particular at a right angle.

Within the reference data set, the window object can be arranged with different poses. The pose of the window object can e.g. be set by a user, in particular using an input device.

Generating the first virtual image such that an inner section of the virtual image is represented in a different way than an outer section of the virtual image advantageously improves the display quality for improved perceptibility by a viewer. In particular, additional information can be displayed without overwhelming the observer with said additional information while also allowing the observer to distinguish shallower and deeper structures in the augmented image, in particular in the overlaid information. A user can set a pose of the window object so that additional information of interest to him or her can be perceived in the augmented image, whereby additional information that is not of interest to the user is not displayed or is displayed to a lesser extent. In particular, a spyhole-like perceptibility of the additional information can be provided for an observer as if the observer perceives the additional information through a spyhole.

It is possible that multiple and in particular different objects are depicted in the inner and/or in the outer section. Different objects can be generated by the same source of information, e.g. the same imaging modality. As an example, different objects can represent different types of tissue, wherein the tissue can be imaged by the same imaging modality such as MRI. A rendering style of such different objects can then be selected individually. This e.g. means that tumor tissue depicted in the inner and/or the outer section can be rendered different than blood vessels.

The reference data set can also represent multiple window objects. These window objects can have different geometries and/or dimensions, e.g. radii and/or depths different from one another. Also, different window objects can be arranged at different poses, e.g. such inner volumes of said window objects overlap at least partially or do not overlap. Further, a first inner section of the first virtual image can represented in a different way than a further inner section of the first virtual image, wherein the first inner section depicts a volume inside a first window object and a further inner section of the first virtual image depicts a volume inside a further window object. It is e.g. conceivable that the first inner section depicts a volume comprising an object, wherein the further inner section depicts a volume comprising the same or a different object. The object(s) can be generated by the same source of information, e.g. the same imaging modality. It is of course also possible that these inner sections are represented in a different way than an outer section.

In other words, different window objects can be arranged such that different objects (e.g., blood vessel and tumour) can be represented by different window objects. Also, the inner sections related to different window objects can be represented in a different way, e.g. by different generation methods or by the same generation method carried out differently, in particular with different rendering styles, e.g. with and without animation.

In addition to the generation of the first virtual image such that an inner section of the virtual image is represented in a different way than an outer section of the virtual image, it is also possible to determine or adjust the representation of an object as a function of the spatial relationship between the window object and the object to be represented. As one example, the representation can be determined or adjusted as a function of the distance between the the object, in particular a reference point of said object, and the opening along a longitudinal axis of the window object or an axis being oriented perpendicular to the surface of the opening.

If the virtual image is generated with a virtual image acquisition unit being a model of the first image acquisition device, the generated virtual image is coherent with the live view which also improves the perceptibility. Further, such a coherent image allows a simple augmentation since no further operations to provide coherency are required.

In another embodiment, the inner section of the virtual image is generated in a different way than the outer section of the virtual image. This can mean that different generation methods are applied to generate the inner and the outer section. If the same generation method is applied, it can be carried out in a different way, e.g. with a different set of parameters. If the virtual image is generated by rendering, a rendering style applied to generate the inner section can be different from a rendering style applied to generate the outer section. Different rendering styles can comprise: transparent rendering, e.g. an alpha blending based rendering, animation-based rendering, texture-based rendering, Fresnel effect-based rendering. A rendering style can also be a style by which at least one, preferably multiple or even all of the following effects are set: color, texture, transparency, animation, Fresnel effect. Different rendering styles may differ by the number of effects and/or the effect-specific parameters and/or the combination of effects. It is e.g. possible that a rendering style defines how surfaces are represented as a function of the surface orientation with respect to the optical axis of a virtual image acquisition device used in the rendering. Different rendering styles can then apply different functions, e.g. differently parametrized functions, to determine the representation as a function of the surface orientation. It is also possible to generate movement effects, in particular by applying grids to surfaces. Different rendering styles can differ in the way such movement effects are generated. It is further possible to apply a particle system in the rendering process. Different rendering styles can differ in the way of how the particle system is applied.

In other words, the reference data can be rendered with different style inside and outside the window object, i.e., each region in the reference data 3D-data is rendered according to its spatial relationship to the geometry and pose of the window object. A region in the reference data can comprise a voxel or a set of voxels of a three-dimensional volume or a vertex or a set of vertices in three-dimensional mesh. The spatial relationship can be defined as an in- or outward distance to a boundary surface, in particular a nearest point on a boundary surface, or a position along at least one axis of a window-specific coordinate system.

It is also possible that the generation is performed as a function of the spatial relationship, in particular between the window object and the object to be represented, e.g. as a function of the aforementioned distance. In particular, the rendering style can be selected as a function of said spatial relationship.

Alternatively or in addition, at least one preset representation characteristic which is assigned to an inner subset of the reference data set is different from the at least one preset representation characteristic which is assigned to an outer subset of the reference data set, wherein the inner subset represents a volume inside the window object and the outer subset represents a volume outside the window object. It is also possible that the preset representation characteristic is selected as a function of the spatial relationship, in particular between the window object and the object to be represented, e.g. as a function of the aforementioned distance.

A representation characteristic can denote an information required to represent or display the reference data, in particular images generated based on the reference data. As one example, a preset representation characteristic can be a transparency characteristic or a color characteristic. It is possible to assign transparency values between 0 (inclusive) and 1 (inclusive) to the inner and outer subset, wherein a transparency value of 1 can denote full transparency and a transparency value of 0 can denote no transparency or a transparency value of 1 can denote no transparency and a transparency value of 0 can denote full transparency. In this case, a transparency value assigned to the inner subset can represent a lower transparency, e.g. by a predetermined amount, than the transparency value assigned to the outer subset or vice versa. It is also possible that the transparency value is determined as a function of the aforementioned spatial relationship, e.g. as a function of the aforementioned distance. It is possible that in a transition from the inner subset or selected portions thereof to the outer subset, a transition of the representation characteristic can take place, for example in a linear manner.

Both alternatives allow to e.g. to represent pixels in the outer section of the virtual image, e.g. pixels which depict the volume outside the window object, in a different way than pixels in the inner section, e.g. in a more transparent manner, semi-transparent, with different color characteristics, or to even blend out said pixels in the outer section.

This advantageously allows a simple generation of the augmented image with an improved representation quality in terms of perceptibility by the observer.

In a further embodiment, the first virtual image signal is generated by a first virtual image acquisition device, wherein the first virtual image acquisition device is an optical model of the first image acquisition device. This and corresponding advantages have been explained before.

In a further embodiment, the method comprises the steps of:
d. receiving a further real image being generated by a further image acquisition device and representing an image of an examination area, wherein the first and the further image acquisition device are part of a stereo viewing system,
e. generating a further virtual image based on the reference data set, wherein an inner section of the further virtual image is represented in a different way than an outer section of the further virtual image,
f. generating a further augmented image which represents the further real image on which the further virtual image is superimposed in at least a partial area.

With respect to the steps d. to f., reference can be made to the steps a. to c. explained above, wherein these explanations refer to
- the further real image instead of the first real image,
- the further image acquisition device instead of the first image acquisition device,
- the further virtual image instead of the first virtual image,
- the further augmented image instead of the first augmented image.

The first and the further augmented images can be corresponding images of a stereo image pair that can provide the user with a depth impression of the augmented examination area. If the virtual images are generated by rendering, this rendering be performed as a function of the extrinsic and intrinsic parameters of the image acquisition devices of the stereo system. In other words, the further virtual image acquisition device can be an optical model of the further image acquisition device.

This advantageously allows an easy generation of virtual images coherent with images of a stereo surgical microscope which provide an improved representation quality in terms of perceptibility of the augmented stereo view for the observer.

In a further embodiment, a virtual image is generated by rendering, wherein a rendering style applied to generate the inner section is different from a rendering style applied to generate the outer section. This has been explained before. Applying different rendering styles advantageously allows a simple generation of a virtual image which then provides the aforementioned improved representation quality of the augmented image.

In a further embodiment, the preset representation characteristic is a transparency characteristic. This has been explained before. Alternatively the preset representation characteristic is a color characteristic. A color characteristic can be a value of an entry of a RGB vector or a CMYK vector which represents the intensity of the respective colour. Such a value can e.g. be in the range of 0 (inclusive) and 255 (inclusive), wherein 255 denotes full intensity and 0 denotes no intensity. It is e.g. possible to determine the intensity of at least one entry as a function of the aforementioned spatial relationship. In this case, it is e.g. possible to reduce the intensity of at least one entry assigned to an element of the outer subset by a predetermined amount or percentage, wherein no such reduction is made for entries assigned to elements of the inner subset. This also advantageously allows a simple generation of a virtual image which then provides the aforementioned improved representation quality of the augmented image.

In a further embodiment, the preset representation characteristic is set as a function of a distance from the window object boundary. As an example, the distance can be a distance of an element, e.g. a voxel or a vertex, of the inner or outer subset to the nearest surface point, a distance to the surface along at least one axis of the common reference coordinate system or along at least one axis of the window-object-specific coordinate system. The distance can e.g. be negative for elements of the inner subset and positive for elements of the outer subset. In this case, it is possible that the preset representation characteristic is set as a function of a distance from the window object boundary only in case of a positive distance. It is e.g. possible to increase the transparency with an increasing distance, in particular positive distance.

This also advantageously allows to further improve the representation quality of the augmented image as no or less additional information which is not of interest for a user is displayed in image sections of the augmented image as such section are not affected by the augmentation with the information represented by the inner subset.

In a further embodiment, a preset representation characteristic is assigned to the boundary surfaces of the window object. In particular, a preset transparency characteristic or a preset color characteristic can be assigned to the boundary surfaces, e.g. to the elements representing the boundary surfaces. It is possible that in a transition from the inner subset to the outer subset via the boundary surface or a selected portion thereof, a transition of the representation characteristic can take place, for example in a linear manner. A selected portion of the boundary surface can e.g. be a surface section providing or comprising the edge that surrounds the opening. This also advantageously allows to further improve the representation quality of the augmented image as boundary surface of the window object can be easily perceived by the observer. This, in turn, improves the perceptibility of (virtual) information represented by the inner section in the augmented image. In particular, the spyhole-like perceptibility of the additional information can be improved.

In a further embodiment, the preset representation characteristic assigned to the boundary surfaces represents 10% transparency or less. This advantageously provides a simple implementation of the improved perceptibility of the boundary surfaces.

In a further embodiment, the window object is provided with a surface texture, e.g. a grid, on the inner boundary surface. This also improves the perceptibility of (virtual) information represented by the inner section in the augmented image. In addition, the grid can provide a visual reference for other purposes such as the estimation of a dimension of a depicted element.

In a further embodiment, a pose and/or a geometry of the window object is set by a user. This can be done by operating the input device described above. This advantageously allows to adjust the additional information of interest which are to be perceived in the augmented image.

In a further embodiment, a pose information related to a visible surface in the examination area is determined, wherein a permissible pose of the window object is a pose in which a distance between the opening of the object and the visible surface is less than a predetermined threshold value. In other words, the window object is only allowed to be arranged in poses such that in the augmented image, the opening of the window object is arranged on the visible surface or no more than a predetermined distance away from it. The distance can be a distance along a surface normal of the visible surface, in particular in a reference point of the surface normal, e.g. a centre of the intersection with the window object.

If the visible surface cannot be determined, in particular with sufficient confidence, the window object can be attached to the field of view of the surgical microscope or its pose can be set by a user. This has been explained before.

The pose information of the visible surface can be determined using the at least one device for determining depth information. Depth information can, for example, represent a distance of the element, in particular from the visible surface, depicted in a pixel from a reference point, a reference line or a reference surface. This distance can be determined along a reference direction. In particular, the distance can be determined in the reference coordinate system. For example, the reference surface can be oriented perpendicular to the optical axis of the surgical microscope, whereby the reference direction is oriented parallel to the optical axis. For example, a point of intersection between the optical axis and a cover glass of the surgical microscope can be arranged in the reference surface. The depth information can be determined using the explained device for determining the depth information, for example a distance sensor. Such a distance sensor can be, for example, an OCT distance sensor, a lidar sensor, a time-of-flight sensor or a triangulation sensor such as a fringe projection sensor. Of course, distance sensors that generate distance information according to other physical operating principles can also be used. The device for determining the depth information can be registered, whereby the depth information can therefore be registered information.

If depth information for the visible surface is determined, a pose information related to the visible surface can also be determined.

It is also possible to determine in particular registered reconstruction information from corresponding images of a stereo system, which represent a three-dimensional reconstruction of the detection area and of the visible surface, whereby the depth information or the pose information related to the visible surface is determined as a function of this reconstruction information. For example, it is possible to detect the visible surface in the three-dimensional reconstruction. It is also possible to determine depth information or pose information related to the visible surface from preoperatively generated information. For example, a skull surface or a dura surface can be detected in preoperative information, in which case, as explained above, the corresponding pose information can also be determined.

Alternatively or in addition, a permissible pose of the window object is a pose in which a deviation between a surface normal and a reference axis of the opening is less than a predetermined threshold value. The reference axis can be an axis of symmetry of the opening. This also improves the perceptibility of (virtual) information represented by the inner section in the augmented image. In particular, the spyhole-like perceptibility of the additional information can be improved as the window object can be displayed aligned with the visible surface.

In a further embodiment, a pose information related to a visible surface in the examination area is determined, wherein a boundary surface of the window object above the visible surface is represented in a different way than a boundary surface of the window object below the surface. As outlined above, the section of the virtual image depicting the boundary surface above the visible surface can be generated in a different way than the section of the virtual image depicting the boundary surface below the visible surface. Alternatively or in addition, at least one preset representation characteristic which is assigned to a subset of the reference data set representing the boundary surface of the window object above the visible surface can be different from the at least one preset representation characteristic which is assigned to a subset of the reference data set representing the boundary surface of the window object below the visible surface. This also improves the perceptibility of (virtual) information represented by the inner section of the window object in the augmented image.

Further proposed is a medical visualization system, in particular comprising or consisting of a surgical microscope, which comprises at least one interface for receiving a first real image signal from an image acquisition device for generating an image of an examination area and at least one evaluation device. The evaluation unit can be a processing unit. The medical visualization system, in particular the evaluation unit, is configured to perform a method according to one of the embodiments described in the present disclosure.

The evaluation device can be designed as a computing device or comprise such a device. A computing device may in turn comprise at least one microcontroller and/or at least one integrated circuit or be designed as such. The evaluation device can in particular generate the virtual image. It is possible that the evaluation device comprises at least one graphics processing unit (GPU) or FPGA for this purpose. The medical visualization system advantageously enables the execution of a method according to one of the embodiments described in this disclosure with the advantages already explained.

Further proposed is a computer program product comprising a computer program, wherein the computer program comprises software means for performing one, more or all steps of the method according to one of the embodiments described in this disclosure when the computer program is executed by or in a computer or an automation system. The computer or automation system may comprise the aforementioned evaluation device. The computer program product may in particular comprise means for performing the rendering, i.e. a rendering engine.

The computer program product advantageously enables the execution of a method according to one of the embodiments described in this disclosure with the advantages already explained.

The invention is explained in more detail using examples of embodiments. The figures show:
- Fig. 1: a schematic flow chart of a method according to the invention,
- Fig. 2: a schematic flow chart of a generation of a virtual image,
- Fig. 3: a schematic flow chart of a generation of a virtual image according to another embodiment,
- Fig. 4a: an exemplary representation of a reference data set,
- Fig. 4b: an exemplary first virtual image generated from the reference data set in Fig. 4a,
- Fig. 4c: an exemplary further virtual image generated from the reference data set in Fig. 4a,
- Fig. 5a: an exemplary augmented image,
- Fig. 5b: another exemplary augmented image,
- Fig. 6a: an exemplary representation of a reference data set with a window object,
- Fig. 6b: an exemplary first virtual image generated from the reference data set in Fig. 6a,
- Fig. 6c: an exemplary further virtual image generated from the reference data set in Fig. 6a,
- Fig. 7: a schematic representation of a visible surface and a window object,
- Fig. 8: a schematic block diagram of a medical visualization system, and
- Fig. 9: a schematic block diagram of a virtual camera and a window object.

In the following, identical reference numerals denote elements with identical or similar technical features.

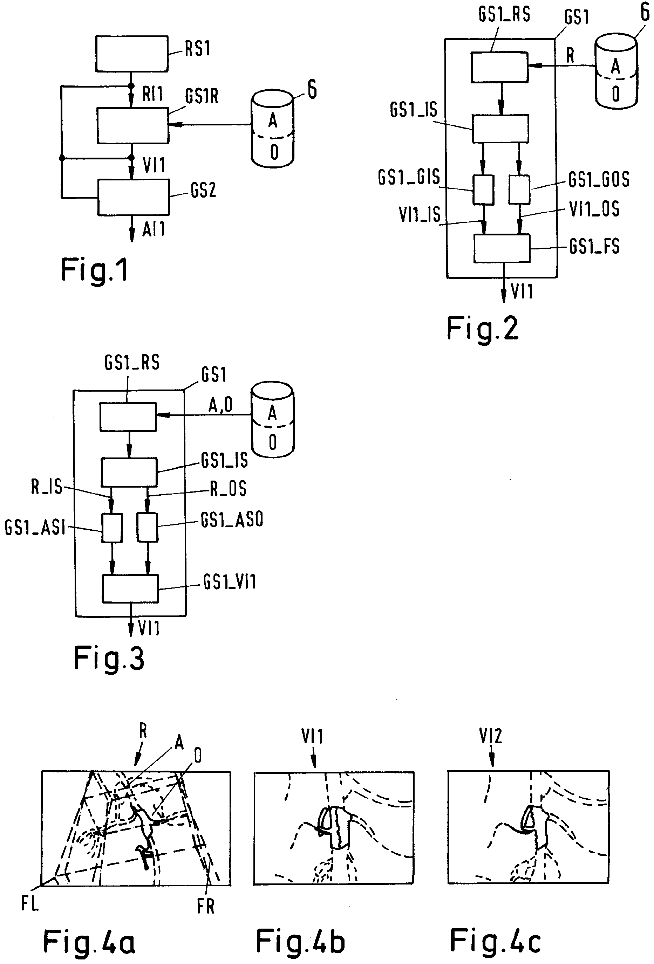

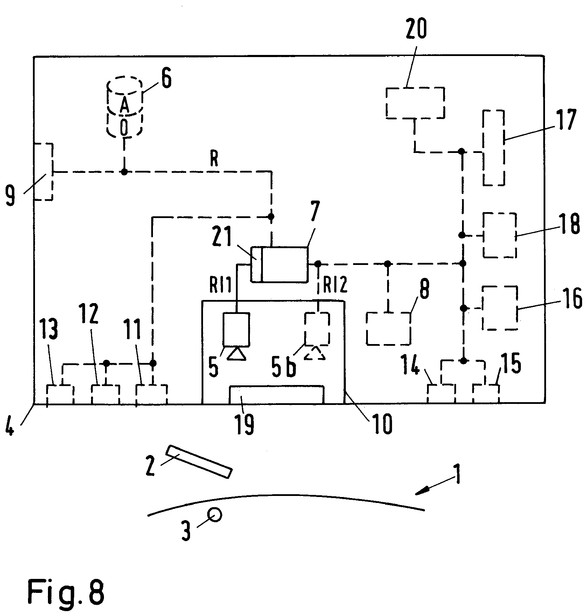

Fig. 1 shows a schematic flow chart of a method according to the invention. In a receiving step RS1, a first real image RI1 is received. The first real image RI1 is generated by a first image acquisition device 5 of a surgical microscope 10 (see Fig. 8) and represents an image of an examination area. The surgical microscope 10 can be part of a medical visualization system 4.

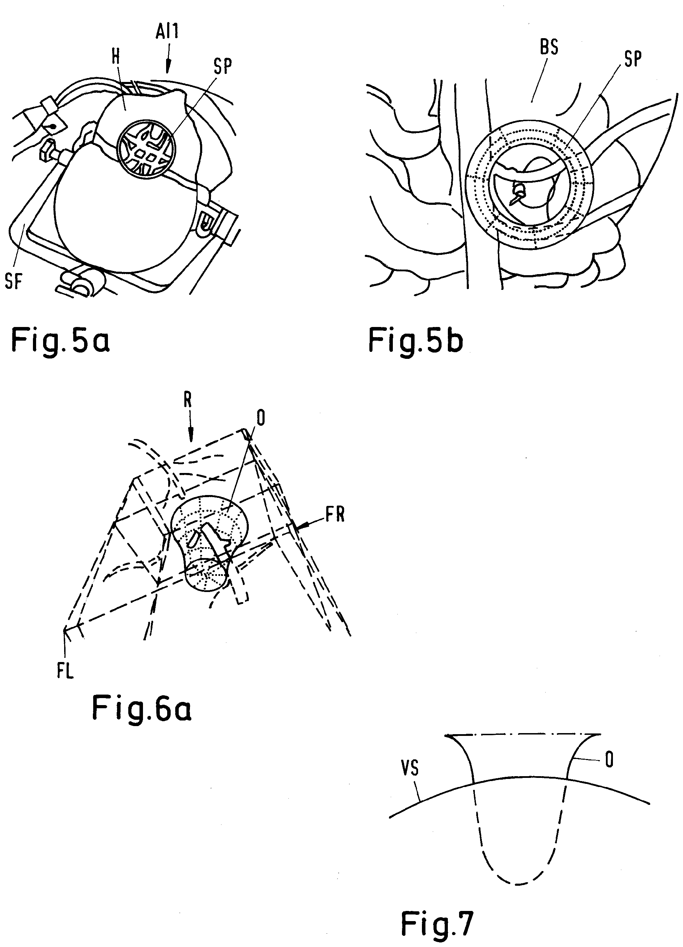

In a first generation step GS1, a first virtual image VI1 is generated. This first virtual image VI1 is generated based on a reference data set R, wherein this reference data set R represents three-dimensional additional information I and a three-dimensional window object O (see e.g. Fig. 6a). Fig. 1 shows that the additional information I and the window object O are stored in a retrievable manner in a storage device 6 of the medical visualization system. However, it is also possible for reference data set R, in particular for the additional information I and/or the window object O, to be recorded intraoperatively and/or retrieved from a network via a suitable interface. The reference data set R can be volume data and can be provided in the form of a point cloud, in the form of a voxel-based representation or in the form of a mesh-based representation. The three-dimensional additional information I can in particular be preoperatively generated information that is provided, for example, in the form of preoperatively generated data. Such information may contain information about tissue or bones. In addition to this, the reference data set R contains information about a window object O with a certain geometry and a certain pose in the reference coordinate system of the reference data set R. The window object O can be considered a virtual object which is added to the additional information I.

The first virtual image VI1 can be generated by rendering based on the reference data set R, in particular by as a virtual image generated with a virtual image acquisition device, whereby this virtual image acquisition device can be a mathematical or physical and, in particular, computer-aided evaluable optical model of the first image acquisition device. The first virtual image VI1 can be generated as a function of a pose, i.e. a position and/or orientation, of the image acquisition device 5 of the surgical microscope 10. In summary, the first virtual image VI1 can corresponds to a real image acquired by the image acquisition device both in terms of the parameters and the acquisition pose. The pose of the image acquisition device can be determined by a tracking system. Based on the pose and the parameters of the image acquisition device as well as based on the reference data set R, a scene for rendering can be generated, wherein the scene can additionally define objects and their material properties, light sources.

The window object O is being open on at least one side. The first virtual image VI1 is provided such that an inner section of the first virtual image VI1 is represented in a different way than an outer section of the virtual image VI1, wherein the inner section depicts a volume inside the window object O and the outer section depicts a volume outside the window object O. Exemplary options to provide the first virtual image VI1 will be explained with reference to the embodiments shown in Fig. 2 or Fig. 3.

In a second generation step GS2, a first augmented image AI1 is generated. The first augmented image A1 represents the first real image RI1 on which the first virtual image VI1 is superimposed in at least a partial area. The first virtual image VI1 can have the same image size as the first real image RI1 and can then be superimposed on the complete first real image RI1. The superposition or overly can be applied in a manner known to the skilled person. In particular, the overlay can be performed with a selected degree of transparency which might vary for different section of the first real image RI1. For example, an alpha blending process can be used for overlaying.

In the case of a surgical microscope 10 with a stereo system comprising the first image acquisition device 5 and a further image acquisition device 5b, a further augmented image can be generated in a similar way as the first augmented image AI1. For this, a further virtual image VI2 (see e.g. Fig. 4c) can be generated in a similar manner as the first virtual image VI1, wherein the further virtual image VI2 corresponds to a real image acquired by the further image acquisition 5b device both in terms of the parameters and the acquisition pose. Then, this further virtual image VI2 is superimposed or overlaid on the complete or on a portion of the further real image which is generated by the further image acquisition device 5b. By displaying both augmented images AI1 to an observer, the observer can get an augmented depth impression of the examination area.

The augmented image AI1 can be transmitted to a display device 20 (see Fig. 8), in particular as an image signal, in order to present it to the viewer in a visually comprehensible way.

Fig. 2 shows a schematic flow chart of a generation of the first virtual image VI1. In the generation step GS1 of this first virtual image VI1, the reference data set R comprising the additional information A and the window object O is received (receiving step GS1_RS). In an identification step GS1_IS, elements of the reference data set R are identified which are required to generate the inner section of the first virtual image VI1. Further, elements of the reference data set R are identified which are required to generate the outer section of the first virtual image VI1. Then, the inner section VI1_IS and the outer section VI1_OS are generated in separate generation steps GS1_GIS, GS1_GOS, in particular by rendering based on the aforementioned scene, wherein this scene also contains information about the elements of the reference data set R which are required to generate the inner section and elements of the reference data set R which are required to generate the outer section of the first virtual image VI1.

To generate the inner section VI1_IS, a first method can applied in the generation step GS1_GIS. To generate the outer section VI1_OS, a further method can be applied in the generation step GS1_GOS, the first method being different from the further method. In particular, different rendering styles can be applied in the generation steps VI1_GIS, VI1_GOS. It is, however, also possible to apply the same generation method in both generation steps VI1_GIS, VI1_GOS but to carry it out in a different way, e.g. with a different set of parameters. In a fusion step GS1_FS, the inner section VI1_IS and the outer section VI1_OS are fused to provide the first virtual image VI1.

As a result, the first virtual image VI1 can be provided such that elements within the volume inside the window object O are depicted with a different representation than elements in the volume outside the window object O.

Fig. 3 shows a schematic flow chart of a generation of a first virtual image VI1 according to another embodiment.

In the generation step GS1 of this first virtual image VI1, the reference data set R comprising the additional information A and the window object O is received (receiving step GS1_RS). In an identification step GS1_IS, an inner subset R_IS and an outer subset R_OS are identified in the reference data set R, wherein the inner subset R_IS represents a volume inside the window object O and the outer subset R_OS represents a volume outside the window object O. In an assignment step GS1_ASI, at least one preset representation characteristic is assigned to the inner subset R_IS, in particular to elements of the inner subset R_IS such as voxels or meshes. In a further assignment step GS1_ASO, at least one preset representation characteristic is assigned to the outer subset R_IS, in particular to elements of the outer subset R_OS such as voxels or meshes. The at least one preset representation characteristic assigned to the inner subset R_IS is different from the at least one preset representation characteristic assigned to the outer subset R_IS. In a generation step GS1_VI1, the first virtual image VI1 is generated based on the reference data set R to which the preset representation characteristics are assigned. This can be done by rendering based on the aforementioned scene, wherein this scene also contains information about the assigned representation characteristics.

The representation characteristic can in particular be a transparency characteristic. Then, a transparency value assigned to the inner subset can be lower, e.g. by a predetermined amount, than the transparency value assigned to the outer subset. The representation characteristic can be a fixed value but it is also possible that the representation characteristic is determined as a function of a spatial relationship with respect to, e.g. a distance from, the window object O, in particular a boundary surface of the window object O.

As a result, the first virtual image VI1 can be provided such that elements within the volume inside the window object O are depicted with a lower transparency than elements in the volume outside the window object O. It is, however, conceivable that depending on the preset representation characteristic, the first virtual image VI1 can be provided such that elements within the volume inside the window object O are depicted with a different representation than elements in the volume outside the window object O.

Fig. 4a shows an exemplary representation of a reference data set R. Shown is a blood vessel as an example of additional information A. Sections of the blood vessel which are outside a window object O of the reference data set R are shown by dashed lines. Sections of the blood vessel which are inside the window object O of the reference data set R are shown by solid lines. To elements of the reference data set R which represent the sections of the blood vessel outside the window object O, a transparency characteristic representing full transparency can be assigned. To elements of the reference data set R which represent the sections of the blood vessel inside the window object O, a transparency characteristic representing a lower transparency, in particular no or a semi-transparency, can be assigned.

Further shown are a first and a further frustrum FL, FR, wherein the first frustum FL indicates a detection volume of a first virtual image acquisition device and the further frustum FR indicates a detection volume of a further virtual image acquisition device. Both virtual image acquisition devices are part of a virtual stereo system. Said virtual stereo system can be an optical model of a (real) stereo system of a medical visualization system 4 (see Fig. 8).

Fig. 4b shows an exemplary first virtual image VI1 generated from the reference data set R in Fig. 4a, in particular by the first virtual image acquisition device. It is conceivable that the section of the blood vessel inside the window object O is depicted with a lower transparency than sections of the blood vessel in the volume outside the window object O.

Fig. 4c an exemplary further virtual image VI2 generated from the reference data set R in Fig. 4a, in particular by the further virtual image acquisition device. It is again conceivable that the section of the blood vessel inside the window object O is depicted with a lower transparency than sections of the blood vessel in the volume outside the window object O. However, the perspectives from which the virtual images VI1, VI2 are taken are different. In particular, the first and further virtual image VI1, VI2 provide corresponding images of a stereo pair generated by the virtual stereo system.

These virtual images VI1, VI2 can then be used to be superimposed onto the first and further real image RI1, RI2 (see Fig. 8) generated by the image acquisition devices 5, 5b of the stereo system of the medical visualization system 4. Then, additional information representing the blood vessel will only be overlaid in an e.g. non- or semi-transparent manner on a section of the real images RI1, RI2 which correspond to the inner section of the virtual images VI1, VI2. This provides a spyhole-like perceptibility of the additional information.

Fig. 5a an exemplary augmented image AI1. The augmented image AI1 shows a head H clamped in a stereotactic frame SF. Further, a spyhole SP is shown, wherein a spyhole SP denotes a window object or is an embodiment thereof. The augmented image A1 is the result of superimposing a virtual image onto a real image as explained before. As a result, an observer can perceive virtually represented elements such as blood vessels inside the head H with a spyhole-like perceptibility. This leads to the fact that the observer is not visually overwhelmed by the addition information in the augmented image. As the virtual image is generated from the three-dimensional reference data set R, the observer is also able to distinguish shallower and deeper elements in the sphyhole region.

The representation of the spyhole SP shown in Fig. 5a is also achieved by assigning a preset representation characteristic to the boundary surfaces of the window object O. In particular, a low transparency characteristic or a preset color characteristic can be assigned to the boundary surfaces, e.g. to the elements representing the boundary surfaces. In particular, a a transparency characteristic representing 10% transparency or less and a black color is assigned to the boundary surface.

This also advantageously allows to further improve the representation quality of the augmented image as boundary surface of the window object can be easily perceived by the observer. This, in turn, improves the perceptibility of (virtual) information represented by the inner section in the augmented image. In particular, the spyhole-like perceptibility of the additional information can be improved.

In a further embodiment, the preset representation characteristic assigned to the boundary surfaces represents 10% transparency or less. This advantageously provides a simple implementation of the improved perceptibility of the boundary surfaces.

Fig. 5b shows another exemplary augmented image AI1. The augmented image AI1 shows a brain surface BS clamped in a stereotactic frame SF. Further, a spyhole SP is shown. Again, the augmented image A1 is the result of superimposing a virtual image onto a real image as explained before. The spyhole SP has a cup shape with a grid structure provided on the inner boundary surfaces. Again, the observer can perceive virtually represented elements such as blood vessels inside the head H with a spyhole-like perceptibility.

Fig. 6a an exemplary representation of a reference data set R with a window object O. A grid structure is provided on the inner boundary surfaces of the cup-shaped window object O. A section of a blood vessel is arranged in the volume inside the window object O. Similar to figure 4a, a first and a further frustrum FL, FR are shown.

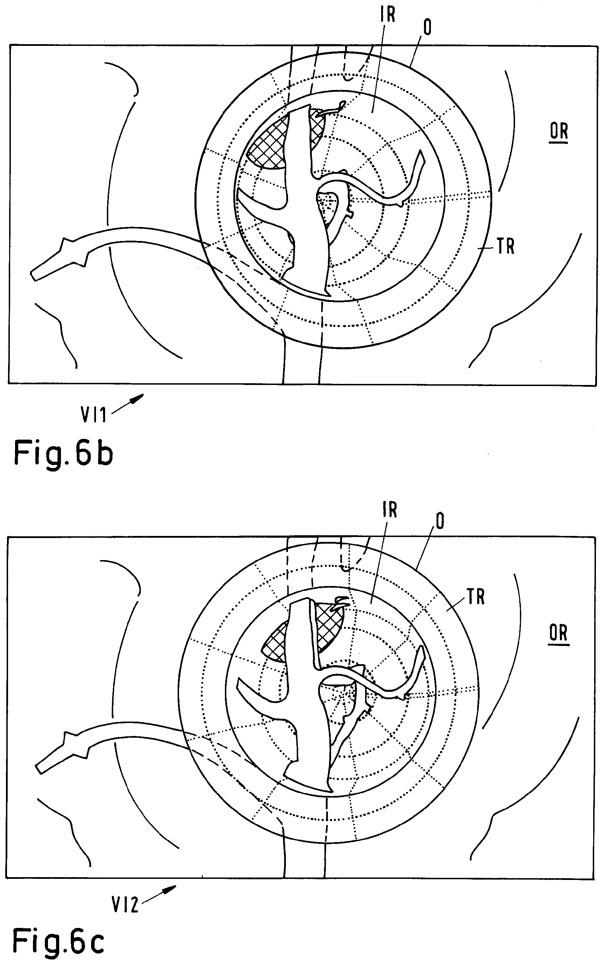

Fig. 6b shows an exemplary first virtual image VI1 generated from the reference data set R in Fig. 6a and which augments a real image, in particular an image generated by a first image acquisition device of a stereo viewing system. It is conceivable that the section of the virtual blood vessel inside the window object O is depicted with a lower transparency than sections of the virtual blood vessel in the volume outside the window object O. Outside the window object O, however, section of the blood vessel depicted by the real image are shown.

Fig. 6c shows an exemplary further virtual image VI2 generated from the reference data set R in Fig. 6a and which augments a real image, in particular an image generated by a further image acquisition device of a stereo viewing system. It is again conceivable that the section of the virtual blood vessel inside the window object O is depicted with a lower transparency than sections of the virtual blood vessel in the volume outside the window object O. However, the perspectives from which the virtual images VI1, VI2 (and the real images) are taken are different. In particular, the first and further virtual image VI1, VI2 provide corresponding images of a stereo pair generated by the virtual stereo system.

Figs. 6b and 6c each show a texture (indicated by dotted lines), e.g. a grid, provided on the inner surfaces of the window object O and a tumour object which is not shown in Fig. 6a and which is indicated by a cross-hatching.

Further indicated is a transition region TR of the window object O which defines a transition of an inner region IR of the window object O to the outside region OR, i.e. the region outside the window object O. The representation of the window object O in the inner region IR can be different from the representation in the transition region TR. As a matter of fact, a degree of visibility of the window object O, in particular of inner surface mesh element(s), in the transition region TR can be lower than a degree of visibility of the window object O in the inner region IR. The transition region overlays a section of the real image in a transparent manner. In this region, the blood vessels depicted in the real image are indicated by dashed lines. In the outside region OR, the blood vessels depicted in the real image are indicated by solid lines. In the inner region IR, the window object O overlays a section of the real image in a non transparent manner and the (virtual) blood vessels depicted in the virtual image are indicated by solid lines. A boundary line between the inner region IR and the transition region TR as well as a boundary line between the window object O and the outside region OR is indicated by a solid line.

Fig. 7 shows a schematic representation of a visible surface VS and a window object O. The visible surface VS is a surface which can be depicted in a real image, in particular the first real image RI1. It is possible to determine the pose of the visible surface, in particular a spatial progression of the visible surface. As explained before, this can e.g. be done by using a device for determining depth information before or by using reconstruction information determined from corresponding images of a stereo system or by using preoperatively generated information. The pose can be determined in a common reference coordinate system. Further shown is the window object O. Indicated by a dash-dotted line is an opening of the window object O. A solid line shows a boundary surface of the window object O above the visible surface VS, wherein a dashed line shows a boundary surface of the window object below the visible surface VS. It is possible to represent the boundary surface above the visible surface VS in a virtual image in a different way than the boundary surface below the surface VS. Reference is made to the previous explanations regarding the way in which this different representation can be achieved.

It is also shown that the window object O is arranged in a pose in which a distance between the opening of the window object O and the visible surface VS is less than a predetermined threshold value. The pose of the window object O can be limited to such poses. The distance in this case is a distance along a surface normal of the visible surface VS, namely in a reference point of the surface normal which is a centre of the intersection with the window object O.

It is also shown that the pose of the window object O is a pose in which a deviation between said surface normal and a reference axis of the opening is less than a predetermined threshold value, the reference axis being an axis of symmetry of the opening.

Fig. 8 shows a schematic block diagram of a medical visualization system 4 and an examination area 1. Also shown are an instrument 2 and a tumour object 3, which are arranged in a detection area of a surgical microscope 10 of the medical visualization system 4. The tumor object 3 can be a concealed object. Optional elements of the medical visualization system 4 are shown as dashed lines. The medical visualization system 4 comprises at least one image acquisition device 5 for microscopic imaging of an examination area 1. The image acquisition device 5 can be part of a surgical microscope 10, which can comprise an objective 19 with a cover glass. This surgical microscope 10 can in turn be designed as a stereo surgical microscope, whereby this comprises a further image acquisition device 5b for microscopic imaging of the examination area 1 and the image acquisition device 5, 5b form a stereo system. The medical visualization system 4 further comprises an evaluation device 7, which can receive a first real image RI1 generated by the image acquisition device 5, whereby the first real image RI1 can be transmitted as an image signal to the evaluation device 7 via an interface 11. The evaluation device can also receive a further real image RI2 generated by the further image acquisition device 5b in a similar manner. Also shown is a storage device 6 in which the reference data set R comprising the additional information A and the window object O can be stored. The medical visualization system 4, in particular the evaluation unit 7, is configured to perform a method shown in Fig. 1. The evaluation unit 7 can e.g. perform the steps RS1, GS1, GS2 shown in Fig. 1.

Furthermore, the medical visualization system 4 may comprise
- at least one white light illuminator 11,
- at least one infrared illuminator 12,
- at least one fluorescence illuminator 13 for exciting fluorescence radiation,
- at least one fluorescence detection device 14 for detecting fluorescence radiation,
- at least one peripheral camera 15,
- at least one device 16 for detecting the viewing direction of an observer,
- at least one tracking system 17,
- at least one input device 18 for operating or controlling the medical visualization system,
- at least one display device 20.

The elements of the medical visualization system 4 can be connected via data and/or signal technology. Not shown are beam filters for providing excitation radiation with wavelengths from a broader spectrum, e.g. the spectrum of the white light illumination device, or for filtering radiation from a broader spectrum.

The environmental camera 15 can be a component of a further tracking system, which is used in particular for the optical determination of a pose of instruments in the detection range of the environmental camera 15. the determination of the pose can be a monoscopic determination. In particular, the determination can also be a marker-based determination.

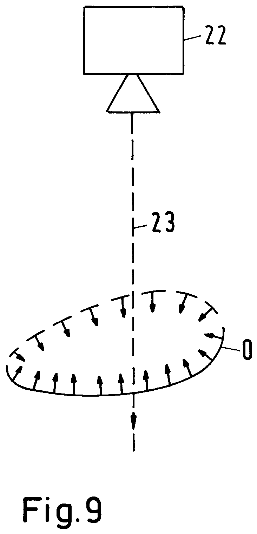

Fig. 9 shows a schematic block diagram of a virtual camera 22 with an optical axis 23 and a window object O, wherein the virtual camera 22 is an exemplary embodiment of a virtual image acquisition unit and the spyhole object 23 is an exemplary embodiment of a window object O. An orientation of the optical axis 23 away from the virtual camera 22 is indicated by an arrow. The optical axis along with its orientation can provide an exemplary embodiment of an observation direction providing a reference direction.

The window object O is encoded by a mesh-based representation and inward oriented surface vectors of each triangle of said mesh are shown. A solid line represents a surface section of the window object O with the surface vectors having a directional component opposite to the reference direction, i.e. pointing in a direction towards the virtual camera 22. This surface section can be represented in a visible manner. A dashed line represents a surface section of the window object O with the surface vectors having a directional component pointing in the same direction as the reference direction, i.e. away from the virtual camera 22. This surface section can be represented in an invisible or less visible manner and can therefore provide the opening of the window object O. It is, however, possible that only a subsection of surface section with the surface vectors having a directional component pointing away from the virtual camera 22 are represented in an invisible or less visible manner, wherein this subsection provides the opening of the window object O. The remaining part can then be represented in a visible manner.

### Reference numerals

- RS1: receiving step
- RI1, RI2: first real image
- GS1, GS2: generation step
- VI1, VI2: virtual image
- A: additional information
- O: window object
- GS1_RS: receiving step
- GS1_IS: identification step
- GS1_GOS: generation step
- GS1_GIS: generation step
- VI1_IS: inner section
- VI1_OS: outer section
- GS1_FS: fusion step
- R_OS: outer subset
- R_IS: inner subset
- GS1_ASI: assignment step
- GS1_ASO: assignment step
- GS1_VI1: generation step
- FL, FR: frustrum
- H: head
- SF: stereotactic frame
- AI1: augmented image
- SP: spyhole
- BS: brain surface
- VS: visible surface
- TR: transition region
- IR: inner region
- OR: outer region
- 1: examination area
- 2: instrument
- 3: tumor object
- 4: medical visualization system
- 5: image acquisition device of a surgical microscope
- 5b: further image acquisition device of the surgical microscope
- 6: storage device
- 7: evaluation device
- 8: device for determining depth information
- 9: interface
- 10: Surgical microscope
- 11: white light illumination device
- 12: infrared illumination device
- 13: fluorescence illumination device
- 14: fluorescence detection device
- 15: environment camera
- 16: direction of view detection device
- 17: tracking system
- 18: input device
- 19: lens
- 20: display device
- 21: interface
- 22: virtual camera
- 23: optical axis

## Claims

1. Method for generating at least a first augmented image (AI1) when operating a medical visualization system (4) with a surgical microscope (10) comprising at least a first image acquisition device (5), the method comprising the steps of
a. receiving a first real image (RI1) being generated by the first image acquisition device (5) and representing an image of an examination area,
b. generating a first virtual image (VI1) based on a reference data set (R) representing three-dimensional additional information (A) and a three-dimensional window object (O), the window object (O) being open on at least one side, wherein an inner section (VI1_IS) of the first virtual image (VI1) is represented in a different way than an outer section (VI1_OS) of the first virtual image (VI1), wherein the inner section (VI1_IS) depicts a volume inside the window object (O) and the outer section (VI1_OS) depicts a volume outside the window object (O),
c. generating the first augmented image (AI1) which represents the first real image (RI1) on which the first virtual image (VI1) is superimposed in at least a partial area.

2. The method of claim 1, **characterized in that** the inner section (VI1_IS) of the first virtual image (VI1) is generated in a different way than the outer section (VI1_OS) of the first virtual image (VI1) and/or wherein at least one preset representation characteristic which is assigned to an inner subset (R_IS) of the reference data set (R) is different from the at least one preset representation characteristic which is assigned to an outer subset (R_OS) of the reference data set (R), wherein the inner subset (R_IS) represents a volume inside the window object (O) and the outer subset (R_OS) represents a volume outside the window object (O).

3. The method of one of the preceding claims, **characterized in that** the first virtual image (VI1) is generated by a first virtual image acquisition device, wherein the first virtual image acquisition device is an optical model of the first image acquisition device (5).

4. The method of one of the preceding claims, **characterized in that** the method comprises the steps of:
a. receiving a further real image (RI2) being generated by a further image acquisition device (5b) and representing an image of an examination area, wherein the first and the further image acquisition device (5, 5b) are part of a stereo viewing system,
b. generating a further virtual image (VI2) based on the reference data set (R), wherein an inner section of the further virtual image (VI2) is represented in a different way than an outer section of the further virtual image (VI2),
c. generating a further augmented image which represents the further real image (RI2) on which the further virtual image (VI2) is superimposed in at least a partial area.

5. The method according to one of the preceding claims, **characterized in that** a virtual image (VI1, VI2) is generated by rendering, wherein a rendering style applied to generate the inner section (VI1_IS) is different from a rendering style applied to generate the outer section (VI1_OS).

6. The method according to one of the claims 2 to 5, **characterized in that** preset representation characteristic is a transparency characteristic or a color characteristic.

7. The method according to one of the claims 2 to 6, characterized that the preset representation characteristic is set as a function of a distance from the window object boundary.

8. The method according to one of the preceding claims, **characterized in that** a preset representation characteristic is assigned to the boundary surfaces of the window object (O).

9. The method according to claim 8, **characterized in that** the preset representation characteristic represents 10% transparency or less.

10. The method according to one of the preceding claims, **characterized in that** the window object (O) is provided with a surface texture on the inner boundary surface.

11. The method according to one of the preceding claims, **characterized in that** a pose and/or a geometry of the window object (O) is set by a user.

12. The method according to one of the preceding claims, **characterized in that** a pose information related to a visible surface (VS) in the examination area is determined, wherein a permissible pose of the window object (O) is a pose in which a distance between the opening of the window object (O) and the visible surface (VS) is less than a predetermined threshold value and/or a deviation between a surface normal and a reference axis of the opening is less than a predetermined threshold value.

13. The method according to one of the preceding claims, **characterized in that** a pose information related to a visible surface (VS) in the examination area is determined, wherein a boundary surface of the window object (O) above the visible surface (VS) is represented in a different way than a boundary surface of the window object (O) below the visible surface (VS).

14. Medical visualization (4) system with a surgical microscope (10) comprising at least one interface (21) to receive a first real image (RI1) generated by an image acquisition device (5) for generating an image of an examination area and at least one evaluation device (7), wherein the medical visualization system (4) is configured to perform a method comprising the steps according to one of claims 1 to 13.

15. Computer program product comprising a computer program, wherein the computer program comprises software means for executing one, more or all of steps of the method according to any one of claims 1 to 13, when the computer program is executed by or in a computer or an automation system or by the medical visualization system of claim 14.
